# EUROPEAN PATENT APPLICATION

(11) **EP 2 680 527 A1**
(43) Date of publication of application: **01.01.2014**
(21) Application number: 12290211.7
(22) Date of filing: 28.06.2012
(51) Int. Cl.: H04L 29/06, H04N 21/2662

(54) **Adaptive streaming aware node, encoder and client enabling smooth quality transition**

(71) Applicant: Alcatel Lucent, 75007 Paris (FR)
(72) Inventor: De Vleeschauwer, Danny, 9940 Evergem (BE); De Vriendt, Johan, 9051 Afsnee (BE); Robinson, Dave, Aldbourne Wiltshire SN8 2NP (GB)
(74) Representative: IP Hills NV

(57) **Abstract**

For adaptive streaming, a video item is available in plural quality versions. Corresponding video slices (411, 421; 412, 422) in the different quality versions are pre-processed to contain bit strings for equal image portions. The client (303) can request a video segment of the video item thereby specifying in its request any arbitrary requested quality / bit rate. An adaptive streaming aware node (301) thereupon selects video slices / NAL units (431, 442) for the requested video segment proportionally from plural quality versions in a ratio matching the arbitrary requested quality. The adaptive streaming aware node (301) streams the video segment composed of the proportionally selected video slices / NAL units (431, 442) to the client (303).

## Description

### Field of the Invention

The present invention generally relates to adaptive streaming of video segments, i.e. fixed size or variable size fragments of a video item with a typical length of a few seconds that can be delivered in different versions or quality levels depending on the available network and client resources. The invention in particular aims at smoothening the fluctuations in video quality, bit rate and play-out buffer fill level when network or client resources change such that the requested quality of a video item needs to be changed.

### Background of the Invention

Video is increasingly delivered using adaptive streaming (AS) techniques, like for instance Hyper Text Transport Protocol (HTTP) adaptive streaming (HAS). HAS has the advantage that it is easily deployable since it traverses firewalls more easily than other protocols, has inherent congestion control inherited from TCP, and makes use of available HTTP infrastructure such as HTTP caching nodes and Content Distribution Network (CDN) nodes.

Using adaptive streaming, a video item, e.g. a video file or stream, is encoded and made available in different versions. The different versions represent different quality levels and different bit rates. At specified points in time, the video client estimates the highest sustainable quality level based on its own measurements, and requests the video item in this highest sustainable quality level. The interval between two consecutive switching times is referred to as a video segment. The bit strings that correspond with that interval - it is noticed that there are as many bit strings as quality versions - are referred to as chunks. The video client in other words monitors the available network throughput, more particularly the throughput offered by the Transport Control Protocol (TCP) and tries to match the video bit rate for the next video segment to the available network throughput by requesting to deliver that video segment with a particular quality. Because the requested bit rate cannot match the available bit rate exactly, the video client needs to maintain a play-out buffer to avoid play-out pauses or interrupts.

In case of traditional HTTP adaptive streaming, each segment is made available through the HTTP server together with a manifest file describing the video item in terms of available quality levels and required segments for play-out. The video client initiates play-out by requesting the manifest file from the HTTP server. The video client thereafter starts downloading the video segments by sending an HTTP-GET request for each segment. The desired quality is specified for each video segment in the HTTP-GET request. The video client thereto incorporates a client heuristic that decides autonomously on the quality level of each requested video segment. The quality selection by the client heuristic is based on the monitored available network throughput as mentioned here above, but may also account for other parameters like the client terminal specifications, e.g. the display size, supported decoders and processing power of the client device, and additional information related to the on-going session such as the filling level of the buffer at the client, etc.

Often, the switching between two quality versions of a video item leads to jumps in quality that are too noticeable by the viewer, jumps in bit rate that are too pronounced, and fluctuations in the play-out buffer fill level that are too big and consequently cause the video client's heuristic to switch again. Even for two adjacent quality versions, the higher quality / bit rate version may largely exceed the available network throughput whereas the lower quality / bit rate version may fall short way of it. As a result, the video client algorithm will switch too often between the two adjacent quality versions leading to annoying quality jumps and viewer experience.

A straightforward solution for the above defined problem consists of foreseeing more quality versions of the video item, and accordingly increasing the intelligence of the video client to refine the granularity of bit rates to switch between. This solution however has as disadvantage that more quality versions of each video item require more storage capacity in the video servers and intermediate nodes in a context of Video-on-Demand (VoD) or require increased network transport capacity to the node from where the video clients are served in the context of live streaming.

In a variant solution wherein the increase of required storage and transport capacity is avoided, transcoding could be implemented in the video servers or intermediate CDN nodes. Through decoding and encoding, such transcoding function could construct new quality versions from the existing ones when requested by the client. The variant solution with transcoder however requires a substantial increase of the processing power in the video servers and intermediate CDN nodes in order to enable the decoding and encoding there.

It is an objective of the present invention to disclose an adaptive streaming aware network node, adaptive streaming aware client, and video encoder that resolve the above defined technical problem of high fluctuations in bit rate, buffer fill level and quality in traditional adaptive streaming, without substantially impacting the required storage capacity or processing power for video servers and CDN nodes, and without impacting the required network transfer capacity.

### Summary of the Invention

According to the present invention, the above defined objective is realized by the adaptive streaming aware network node defined by claim 1, able to stream video segments of a video item to a client, the video item being available in plural quality versions, the plural quality versions having the same image aspect ratio and corresponding video slices in the plural quality versions being pre-processed to contain bit strings for equal image portions, the adaptive streaming aware network node comprising:
- request receiving means for receiving and interpreting a request from the client for a video segment of the video item, the request specifying an arbitrary requested quality;
- slice selecting means for selecting video slices for the video segment proportionally from the plural quality versions in a ratio matching the arbitrary requested quality;
- streaming means for streaming to the client the video segment composed of the video slices proportionally selected.

Thus, the present invention foresees in a mechanism in the video server or intermediate node to construct for the requested video segment a bit string or chunk of any arbitrary quality requested by the client. The bit string is construed by picking video slices of existing quality versions in quantities or proportions that enable to match the requested arbitrary quality / bit rate. Such video slice is a set of macro-blocks that can be decoded independently. A macro-block is a basic block of for instance 16 x 16 pixels. The bit string corresponding with a video slice is referred to as a Network Adaptation Layer (NAL) unit. The present invention thus intelligently selects NAL units from for instance two adjacent quality versions of the video item in order to construct a chunk for the requested video segment matching or approaching the desired arbitrary quality level, typically a quality level in between the quality versions whose NAL units are selected and proportionally combined.

Since the node according to the invention makes use of video slices in available quality versions, no decoding and encoding is required in the NAL unit selection process and consequently the required processing power in the video server and/or CDN nodes is not negatively impacted. The overall storage capacity required in the video servers and CDN, and the overall network transfer capacity is also not affected since no additional quality versions of the video items are foreseen and stored.

In order to avoid quality degradations the video slices or NAL units preferably can be decoded independently, i.e. without relying on NAL units of previously decoded video segments that may have been selected from quality / bit rate versions of the video item that differ from the currently decoded video slice or NAL unit. In order to have NAL units that can be decoded independently, it is necessary that the video slices in the different quality versions of the video item are pre-processed to contain bit strings for equal image portions, i.e. bit strings that represent the same area in the image. In other words, although the slices can differ from video segment to video segment, the video slices must be aligned across the different quality versions. It is further preferred that equal motion vectors are encoded in corresponding video frames of the different quality versions and that frame mode transitions in the different quality versions are synchronized, as will be explained in more detail below. It is a further prerequisite for the current invention that the different quality versions have the same image aspect ratio, i.e. the same width/height aspect ratio, e.g. 4:3 or 16:9.

In a first embodiment of the adaptive streaming aware network node according to the current invention, defined by claim 2, the slice selecting means are adapted to randomly or pseudo-randomly select video slices from a first quality version and a second quality version of the video item with respective probabilities determined to match the arbitrary requested quality/bit rate.

Thus, in a first embodiment, the video slices are picked randomly or pseudo-randomly with probability P from a first quality version and probability 1-P from a second quality version of the video item. The first quality version and second quality version shall typically be successive quality versions, with the first quality version having a lower quality / bit rate than the arbitrary requested quality, and the second quality version having a higher quality / bit rate than the arbitrary requested quality. P shall be determined such that the proportion of first quality / first bit rate slices and second quality / second bit rate slices enables to match or approach the arbitrary requested quality.

In a second embodiment of the adaptive streaming aware network node according to the present invention, defined by claim 3, the slice selecting means are adapted to select a first amount of video slices of the video item from a first quality version and a second amount of video slices of the video item from a second quality version, the first amount and the second amount being determined to match the arbitrary requested quality.

Thus, in the second embodiment, the video slices are picked in a deterministic way from a first quality version and a second quality version of the video item. Again, the first quality version and second quality version shall typically be successive quality versions, with the first quality version having a lower quality / bit rate than the arbitrary requested quality, and the second quality version having a higher quality /bit rate than the arbitrary requested quality. The proportion of first quality / first bit rate slices and second quality / second bit rate slices is determined to match or approach the arbitrary requested quality.

In a third embodiment of the adaptive streaming aware network node according to the present invention, defined by claim 4, the slice selecting means are adapted to select a first amount of video slices having a first semantic meaning from a first quality version of the video item and a second amount of video slices having a second semantic meaning from a second quality version of the video item, the first amount and the second amount being determined to match the arbitrary requested quality.

Thus, in the third embodiment, the video slices are also picked in a deterministic way from a first quality version and a second quality version of the video item. Again, the first quality version and second quality version shall typically be successive quality versions, with the first quality version having a lower quality / bit rate than the arbitrary requested quality, and the second quality version having a higher quality / bit rate than the arbitrary requested quality. In the third embodiment, slices that have a bigger impact on the subjective quality experience like for instance foreground slices will be selected from the second higher quality / bit rate version whereas slices that have a lower impact on the subjective quality experience like for instance background slices will be picked from the first lower quality / bit rate version. In other words, the semantic meaning of the slices is considered in determining which slices are picked from the first version and which slices are picked from the second version. The proportion of first quality / first bit rate slices and second quality /second bit rate slices is determined to match or approach the arbitrary requested quality.

In a fourth embodiment of the adaptive streaming aware network node according to the present invention, a first quality version and a second quality version of said video item have resolutions that differ by a rational number N'/N; and substantially equal coding decisions are taken for a square of NxN macro blocks in said first quality version and a corresponding square of N'xN' macro blocks in said second quality version. In the context of this invention a set of macro blocks (respectively slice) in the first image is said to correspond to a set of macro blocks (respectively slice) in the second image if both sets cover the same fraction of the surface area of the image. The slice selection in the fourth embodiment can be implemented as in the first, second or third embodiment.

Thus, in the fourth embodiment, the two quality versions are assumed to have resolutions that differ by a rational number. The slice structure in both resolutions is still chosen such that slices in different resolutions correspond in the sense that these slices cover the same fraction of the surface area of the image in both resolutions. Furthermore the encoding process is restricted in the fourth embodiment such that for the macro-blocks that form part of the square of N² macro-blocks in the first quality version and the corresponding macro-blocks that form part of the square of N'² macro-blocks in the second quality version, substantially equal coding decision are taken, e.g. the motion vectors are chosen as similar as possible and the mode selection is chosen the same for all these macro-blocks. This will result in less distortion from the NAL unit picking process that can be as in the first embodiment, i.e. randomly with probability P, as in the second embodiment, i.e. in a partial deterministic way, or as in the third embodiment, i.e. taking into account the semantic meaning of slices.

In addition to an adaptive streaming aware network node as defined by claim 1, the current invention relates to a corresponding method for streaming video segments of a video item to a client as defined by claim 6, the video item being available in plural quality versions, the plural quality versions having the same image aspect ratio and corresponding video slices in the plural quality versions being pre-processed to contain bit strings for equal image portions, the method comprising:
- receiving and interpreting a request from the client for a video segment of the video item, the request specifying an arbitrary requested quality;
- selecting video slices for the video segment proportionally from the plural quality versions in a ratio matching the arbitrary requested quality; and
- streaming to the client the video segment composed of the video slices proportionally selected.

As defined by claim 7, the invention further concerns an adaptive streaming video encoder able to encode video segments of a video item in plural quality versions, the plural quality versions having the same image aspect ratio, and the adaptive streaming video encoder being adapted to encode in corresponding video slices of the plural quality versions bit strings for equal image portions.

Indeed, since the present invention combines video slices of plural versions of a video item to approach the arbitrary requested quality, corresponding video slices in the different versions must represent the same area of an image in the video item. The area that is represented by a video slice can be of any shape and may vary from frame to frame, but the encoder must pre-process the different versions in such a manner that corresponding slices in all versions of a video item contain bit strings or chunks for the same image portion or surface area. In other words, a one-to-one mapping must exist between slices of different quality versions of the video item. Otherwise, an arbitrary selection of slices picked from plural versions of the video item will not represent a complete image or frame.

According to an optional aspect defined by claim 8, the adaptive streaming video encoder according to the present invention may further be adapted to use in corresponding video frames of the plural quality versions equal motion vectors.

The different versions shall contain I-frames or frames that can be decoded independently, i.e. without use of earlier received frames. Since the video slices are aligned between the different versions, also the I-frames are aligned. Other type of frames, i.e. the P-frames or B-frames, use info from earlier received frames in order to be decoded. The earlier received frames needed are referenced by a motion vector that accompanies the frame and points to pixel values in the earlier received frames. When implementing the present invention, i.e. selecting video slices from plural quality versions, the encoding restrictions are preferably such that in corresponding P- and B-slices of the different versions, the motion vectors are made identical (taking the scaling factor between the resolutions of both considered quality versions into account). This will reduce noise in comparison to a situation where corresponding slices from different quality versions of the video item contain different motion vectors as a result of which the pixels referenced in earlier received frames would depend on the slice selected.

According to another optional aspect defined by claim 9, the adaptive streaming video encoder according to the present invention may further be adapted to synchronize frame mode transitions in the plural quality versions.

Indeed, if no acceptable motion vector can be found for a P-frame, e.g. in case of a scene change where information from earlier received frames cannot be used to generate/decode a new frame, the frame is encoded as an I-frame that can be decoded independently. Such frame mode changes or frame mode transitions preferably are also aligned across the different quality versions in order to reduce noise when the present invention is applied.

In addition to an adaptive streaming video encoder as defined by claim 7, the present invention also relates to a corresponding method for encoding video segments of a video item in plural quality versions, the plural quality versions having the same image aspect ratio, and the method comprising encoding in corresponding video slices of the plural quality versions bit strings for equal image portions. This method is defined by claim 10.

The present invention further also relates to an adaptive streaming aware client as defined by claim 11, able to request, receive and decode video segments of a video item, the video item being available in plural quality versions, the plural quality versions having the same image aspect ratio and corresponding video slices in the plural quality versions being pre-processed to contain bit strings for equal image portions, the adaptive streaming aware client comprising:
- request generating means for generating a request for a video segment of the video item, the request specifying an arbitrary requested quality that does not correspond with any one of the plural quality versions.

Thus, the adaptive streaming aware client according to the present invention is allowed to request video segments of any arbitrary quality. It is no longer restricted to the quality versions listed in the manifest file, but can request to deliver a video segment in any intermediate quality. The intermediate version shall then be constructed by the server according to the present invention through picking slices from different existing quality versions in relative proportion to approach the requested arbitrary quality level. The client shall determine the requested quality level in function of the monitored throughput, play-out buffer fill level, and eventual other parameters, and no longer needs to map the calculated desired quality level / bit rate to the closest available quality level listed in the manifest file.

In a further embodiment of the adaptive streaming aware client according to the present invention, defined by claim 12, the client further comprises:
- manifest file receiving means for receiving and interpreting a manifest file describing availability of video slices of the video item in the plural quality versions;
- per-slice quality selecting means for selecting a requested quality version for each video slice in the video segment, the requested quality version being selected proportionally from the plural quality versions in a ratio matching the arbitrary requested quality;
- the request generating means being adapted to generate a request specifying the requested quality version for each video slice.

Thus, an embodiment of the invention may be contemplated wherein the intelligence for selecting the video slices proportionally from the different quality versions in order to approach an arbitrary intermediate quality level is integrated in the client instead of the server. Such client must send for each video slice a request specifying the quality level. In order to be able to do so, the client must be knowledgeable on the quality levels wherein each video slice is available. This information may be specified in the manifest file. In order to select the quality version for each video slice, the client may apply algorithms that are similar to the ones described above for the server implementation of the current invention: the slices may be selected proportionally from different quality versions using probabilities, the slices may be selected proportionally from different quality versions in a deterministic fashion, or they may be selected from different quality versions taking into account their semantic meaning.

In addition to an adaptive streaming aware client as defined by claim 11, the present invention also relates to a corresponding method for requesting, receiving and decoding video segments of a video item as defined by claim 13, the video item being available in plural quality versions, the plural quality versions having the same image aspect ratio and corresponding video slices in the plural quality versions being pre-processed to contain bit strings for equal image portions, the method comprising:
- generating a request for a video segment of the video item, the request specifying an arbitrary requested quality that does not correspond with any one of the plural quality versions.

### Brief Description of the Drawings

Fig. 1 illustrates adaptive video streaming between an HAS server and HAS client according to the prior art;

Fig. 2 illustrates pre-processing by an HAS encoder according to the present invention;

Fig. 3 illustrates adaptive video streaming between an HAS server and HAS client according to the present invention; and

Fig. 4 illustrates semantic meaning based selection of video slices in an embodiment of the HAS aware server according to the present invention.

### Detailed Description of Embodiment(s)

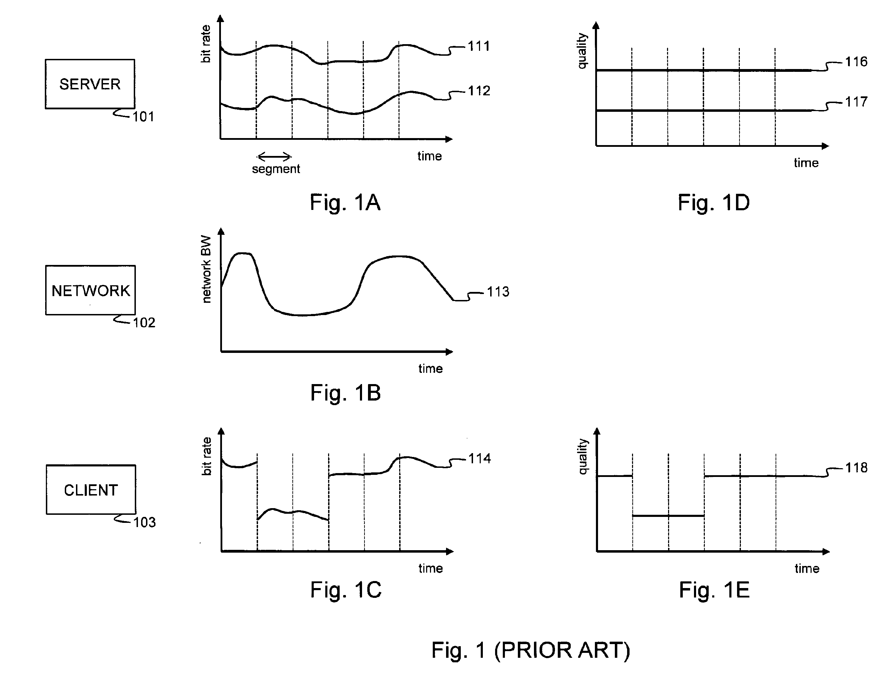

Fig. 1 illustrates the technical problem of adaptive streaming according to the prior art. Fig. 1D shows two adjacent quality levels 116 and 117 wherein a video item is offered. The HAS server 101 informs the HAS client 103 on the existence of the quality levels 116 and 117 via the so called manifest file. The bit rates associated with each of these quality levels 116 and 117 during a number of successive video segments, are drawn in Fig. 1A and respectively referenced 111 and 112. The HAS client estimates the available bandwidth or bit rate in network 102. The estimated available bandwidth is referenced 113 in Fig. 1B. The HAS client 103 then tries to match the bit rate 114 to the available bit rate 113 by requesting successive video segments in respective quality levels depending on the estimated available bandwidth 113. This requested quality levels 118 are illustrated by Fig. 1E.

In the prior art, the switching between two adjacent quality versions like 116 and 117 is often too coarse. This leads to quality jumps in 118 that are too noticeable and to jumps in bit rate 114 that are too pronounced. The higher bit rate version 116 of the two largely exceeds the available network throughput while the lower bit rate version 117 of the two falls way short of it. This leads to large video play-out buffer fluctuations which will cause the HAS client 103 to switch the requested quality level too often.

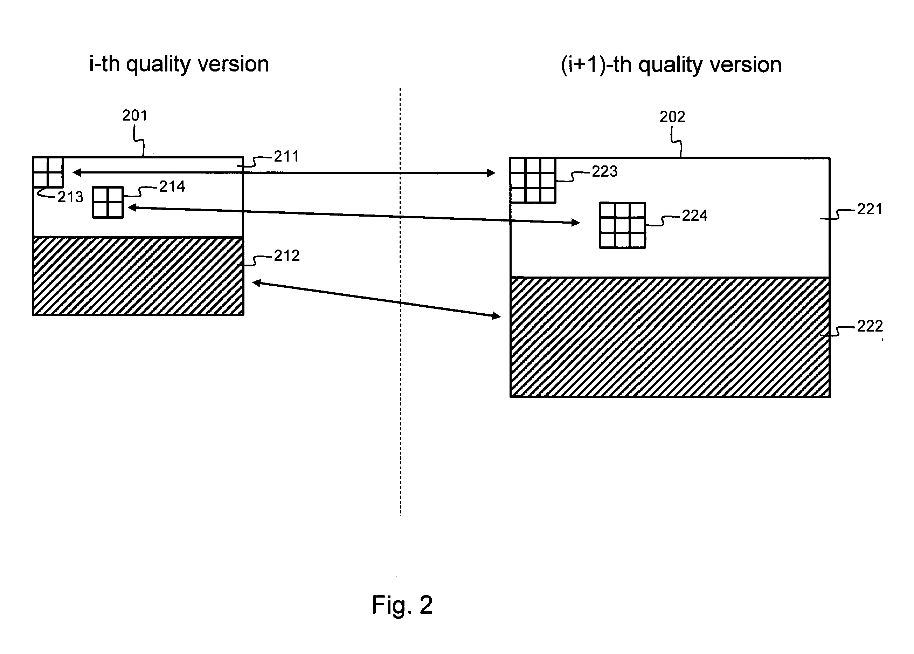

The present invention restricts the encoding process of video items that are made available in plural quality versions for adaptive streaming such that certain decisions made for corresponding sets of macro-blocks or corresponding video slices in the different quality versions of a video item are similar. This is illustrated by Fig. 2 and will be further explained in the following paragraphs.

A video slice in one quality version corresponds to a video slice in another quality version of the video item if both slices contain the same sets of corresponding macro-blocks. This is the case when the video slices cover the same relative surface areas in both quality versions. Besides the fact that corresponding slices in the different quality versions need to contain corresponding macro-blocks, there is no additional restriction. A video slice can be of any shape and may vary from frame to frame. In Fig. 2 for instance, frame 201 in the i-th quality version of a video item contains a first slice 211 and a second slice 212 that respectively cover the upper half and lower half of the image surface area. In the first slice 211, sets 213 and 214 of macro-blocks are drawn. The corresponding frame 202 of the (i+1)-th quality version of the same video item contains a first slice 221 and a second slice 222 that respectively correspond with the slices 211 and 212 in frame 201. The video slices 221 and 222 respectively also cover the upper half and lower half of the image surface area. In video slice 221, the sets of macro-blocks 223 and 224 are drawn that respectively correspond with the sets of macro-blocks 213 and 214 in frame 201. In another example, a first slice could for instance cover the foreground (instead of the upper half of the frame) and another slice could for instance cover the background (instead of the lower half of the frame). Foreground and background may evolve from frame to frame, and consequently the surface areas covered by the slices may also evolve from frame to frame.

The aspect ratio of the different quality versions, i.e. the height/width ratio of the images or frames in the different quality versions, is assumed to be the same. It is further assumed that (k,l) and (k',l') be the coordinates of a certain macro-block in respectively the i-th and (i+1)-th quality version of a video item. Such a macro-block is a basic block of pixels and consists for instance of a 16x16 square of luma samples and two corresponding 8x8 chroma samples in a 4:2:0 image sequence. A set of N² macro-blocks in the i-th quality version then corresponds with a set of N'² macro-blocks in the (i+1)-th quality version, if the coordinates (k,l) of pixels in the i-th quality version and the coordinates (k',l') of pixels in the (i+1)-th quality version obey the relation: k/N=k'/N'=k" and I/N=I'/N'=I" where the pair (k",I") associated with the correspondence designates an area that covers the same fraction of the total surface area of an image or frame in both versions. Herein, N/N' represents the ratio of the resolution of the i-th and (i+1)-th quality version of the video item, with N and N' co-prime, i.e. N and N' are integer values that have no common factor. It is further assumed that RSᵢ<RSᵢ₊₁ with RSᵢ being the resolution of the i-th quality version and RSᵢ₊₁ being the resolution of the (i+1)-th quality version.

The above definition of corresponding macro-blocks and slices is illustrated in Fig. 2 for N=2 and N'=3. For example, the set 213 of macro-blocks with coordinates (0,0), (0,1), (1,0) and (1,1) in frame 201 of the i-th quality version corresponds with the set 223 of macro-blocks with coordinates (0,0), (0,1), (0,2), (1,0), (1,1), (1,2), (2,0), (2,1) and (2,2) in frame 202 of the (i+1)-th quality version. If the different quality versions are of the same resolution, i.e., if N=N', corresponding macro-blocks are macro-blocks with the same coordinates.

In summary, the present invention requires that the slice structure is chosen such that there is a one-to-one mapping of corresponding slices between the different quality versions of a video item. In particular, slices in different quality versions must correspond.

It is further noticed that in HAS, it is preferred that the first frame of each chunk is an IDR or Instantaneously Decoded Refresh frame. Such frame needs to be made up of I-slices because at a switching point, i.e. at segment edges, the frame needs to be decodable without reference to previous frames. This is so because it is not sure which versions of the frames will be available at the client.

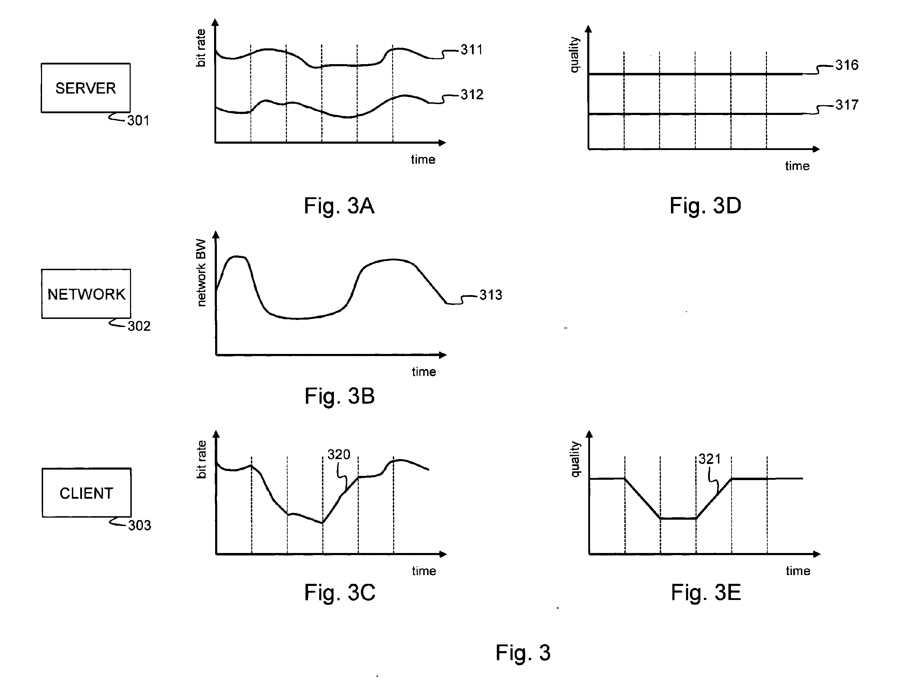

An implementation of the present invention is illustrated by Fig. 3. The server 301 picks NAL units or slices of two adjacent quality versions with respective qualities 316 and 317 in Fig. 3D. For each slice mₖ (mₖ = 1 ... Mₖ) of access unit k - an access unit represents the bit string needed to decode one image - it has to be decided which of the two corresponding NAL units in the adjacent quality versions 316 and 317 will be selected. This selection process can be either random or it can be driven by certain rules as will be described with reference to the different embodiments below. The ratio of NAL units/slices that is selected from the first quality version 316 and NAL units/slices that is selected from the second quality version 317 is determined by the quality requested by the client 303 in view of the throughput monitored in network 302. This monitored throughput or bandwidth is referenced 313 in Fig. 3B, whereas the bit rates that correspond with the quality versions 316 and 317 during consecutive video segments are referenced 311 and 312 in Fig. 3A. It is thus assumed that in the manifest file two quality / bit rate versions with nominal bit rates Rᵢ and Rᵢ₊₁ (with Rᵢ<Rᵢ₊₁) are announced. These quality versions have respective corresponding qualities Qᵢ or 317 and Qᵢ₊₁ or 316. The construction of the intermediate chunk by server 301 consists of picking for each of the slices the NAL unit from the version with nominal bit rate Rᵢ₊₁ or the corresponding NAL unit from the version with the nominal bit rate Rᵢ. If a fraction P of the NAL units is chosen from the first quality version 316 and a fraction (1-P) is chosen from the second quality version 317, a chunk with nominal bit rate P.Rᵢ₊₁+(1-P).Rᵢ is constructed and the corresponding quality will be close to P.Qᵢ₊₁+(1-P).Qᵢ. The server 301 determines the parameter P such that any nominal bit rate R between the two adjacent bit rates Rᵢ and Rᵢ₊₁ can be obtained. This is illustrated by Fig. 3C and Fig. 3E. The client 303 requests any arbitrary quality / bit rate in view of the monitored throughput 313. The server 301 determines the parameter P in order to deliver the requested video segment with a quality / bit rate that approximates the requested arbitrary quality / bit rate. Certain video segments will be delivered with a bit rate 320 in between the bit rate 311 of the first quality version and the bit rate 312 of the second quality version. This video segments also will be delivered with a quality 321 in between the first quality level 316 and the second quality level 317. As a result, no coarse transitions are made between quality levels, and no jumps are made in bit rate.

In a first embodiment of the invention, the two quality versions of the video item are assumed to have the same resolution and the selection process of slices /chunks is random. In this embodiment, N=N'=1 and corresponding slices contain the same macro-blocks. The encoding restrictions are such that in corresponding P- and B-slices, the motion vectors are reused and the mode decisions in all corresponding macro-blocks, i.e. whether or not a macro-block is of type I, P or B or how to split macro-blocks in smaller blocks, ... are chosen consistently as much as possible. In fact only the quantiser decisions differ in both corresponding slices. For each of the corresponding slices (k = 1 ... K and mₖ = 1 ... Mₖ), one of the two versions is picked at random with probability P from the (i+1)-th quality version. A slight quality degradation is possible because the NAL unit associated with a P- or B-slice may be selected from one quality version while pointing via its motion vectors to frames that were decoded based on NAL units selected from the other quality version. As the residual signal of this particular slice will differ from the residual signal in the encoder, there will be an additional distortion. If the above rules are followed however, this distortion will be small. The requirement that the mode selected need to be the same for corresponding macro-blocks can be relaxed, but this will introduce additional distortion in the newly constructed chunk.

In a second embodiment of the invention, the two quality versions are again assumed to have the same resolution and the selection process aims for gradual increase or decrease in quality. In this second embodiment the encoding restrictions are identical to those of the first embodiment, but the selection process of the NAL units differs. A gradual increase or gradual decrease of the bit rate are implemented similarly. In what follows, only the gradual decrease is described in detail. Each access unit k (k = 1 ... K) is visited one by one in display order during the NAL unit selection process. Each NAL unit of the k-th access unit (mₖ = 1 ... Mₖ), is picked from the (i+1)-th quality version with probability P=1-(k-1)/(K-1). This random selection process can be substituted by a partially deterministic one. If it is supposed that there are 11 access units in the chunk, each containing 10 slices, then all NAL units in the first access units may be picked from the (i+1)-th quality version. In the next access units, 9 from 10 NAL units are picked from the (i+1)-th quality version, in the next one 8 from 10 NAL units are picked from the (i+1)'th quality version, etc.

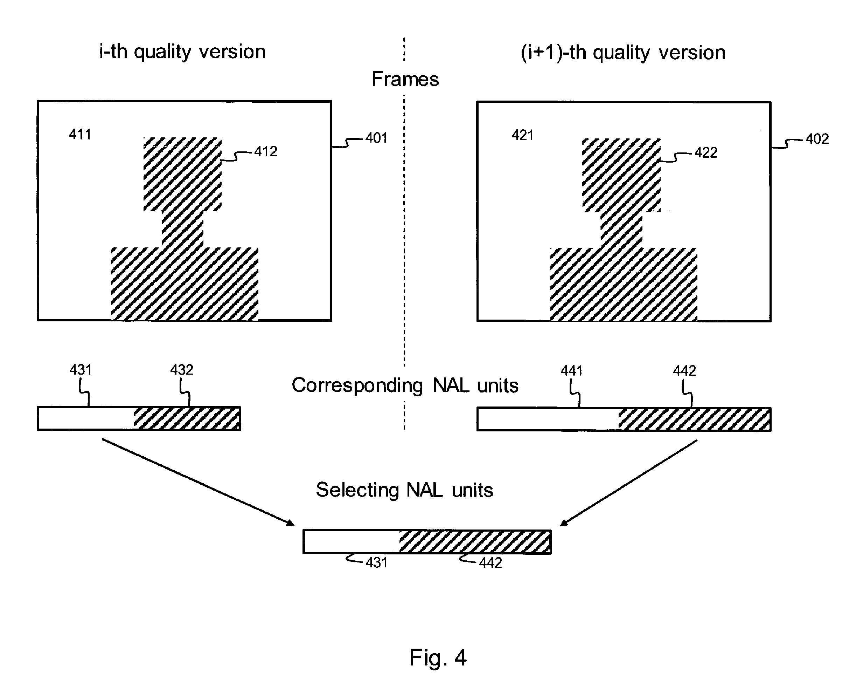

In a third embodiment of the invention, the two quality versions again are assumed to have the same resolution and the selection process depends on the importance of the slice. In this third embodiment, the encoder restrictions are again equal to those of the first embodiment, but the selection process of the NAL units shall differ. In the images the slices are assumed to have a semantic meaning that can be used for selecting the quality version. For instance, there may be foreground and background slices as illustrated in Fig. 4. In the i-th quality version, image 401 may have a first slice 411 of background pixels and a second slice 412 of foreground pixels. In the (i+1)-th quality version, the corresponding image 402 has a corresponding first slice 421 of background pixels and a corresponding second slice 422 of foreground pixels. The corresponding chunk in the i-th quality version contains the NAL units 431 and 432. Similarly, the corresponding chunk in the (i+1)-th quality version contains the NAL units 441 and 442. In the newly constructed slice / chunk, the highest quality NAL unit 442 is picked for each foreground slice, while for the background slices the lowest quality NAL unit 431 is selected to the extent the ratio of first quality level / second quality level slices to be respected to match the requested intermediate quality requires so. It is obvious that the semantic meaning based selection of slices from plural quality versions of a video item can be combined with the technique to gradually increase or decrease the quality as described here above in relation to the second embodiment 2.

In a fourth embodiment, the two quality versions are assumed to have resolutions that differ by a rational number. The slice structure in both resolutions is chosen such that slices in different resolutions correspond. Furthermore the encoding process is restricted such that for the macro-blocks that form part of the square of N² macro-blocks in the i-th quality version (of bit rate Rᵢ) and the corresponding macro-blocks that form part of the square of N'² macro-blocks in the (i+1)-th quality version (of bit rate Rᵢ₊₁), similar coding decision are taken as much as possible, e.g. the motion vectors are chosen as similar as possible and the mode selection is chosen the same for all these macro-blocks. The more decisions are commonly taken, the less distortion will result from the NAL unit picking process according to the present invention, but the more the codec will diverge from the optimal rate-distortion curve. The NAL unit selection process can be as in the first embodiment, i.e. randomly with probability P, the second embodiment, i.e. in a deterministic way, or the third embodiment, i.e. taking into account the semantic meaning of slices.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An adaptive streaming aware network node (301) able to stream video segments of a video item to a client (303), said video item being available in plural quality versions (316, 317), said plural quality versions (316, 317) having the same image aspect ratio and corresponding video slices (411, 421; 412, 422) in said plural quality versions (316, 317) being pre-processed to contain bit strings for equal image portions, said adaptive streaming aware network node (301) comprising:
- request receiving means for receiving and interpreting a request from said client (303) for a video segment of said video item, said request specifying an arbitrary requested quality;
- slice selecting means for selecting video slices (431, 442) for said video segment proportionally from said plural quality versions (316, 317) in a ratio matching said arbitrary requested quality;
- streaming means for streaming to said client (303) said video segment composed of said video slices (431, 442) proportionally selected.

2. An adaptive streaming aware network node (301) according to claim 1,
wherein said slice selecting means are adapted to randomly or pseudo-randomly select video slices (431, 442) from a first quality version (317) and a second quality version (316) of said video item with respective probabilities determined to match said arbitrary requested quality.

3. An adaptive streaming aware network node (301) according to claim 1,
wherein said slice selecting means are adapted to select a first amount of video slices (431) of said video item from a first quality version (317) and a second amount of video slices (442) of said video item from a second quality version (316), said first amount and said second amount being determined to match said arbitrary requested quality.

4. An adaptive streaming aware network node (301) according to claim 1,
wherein said slice selecting means are adapted to select a first amount of video slices (431) having a first semantic meaning from a first quality version (317) and a second amount of video slices (442) having a second semantic meaning from a second quality version (316), said first amount and said second amount being determined to match said arbitrary requested quality.

5. An adaptive streaming aware network node (301) according to claim 2 or claim 3 or claim 4,
wherein a first quality version and a second quality version of said video item have resolutions that differ by a rational number N'/N; and
wherein substantially equal coding decisions are taken for a square of NxN macro blocks in said first quality version and a corresponding square of N'xN' macro blocks in said second quality version.

6. A method for streaming video segments of a video item to a client (303), said video item being available in plural quality versions (316, 317), said plural quality versions (316, 317) having the same image aspect ratio and corresponding video slices (411, 421; 412, 422) in said plural quality versions (316, 317) being pre-processed to contain bit strings for equal image portions, said method comprising:
- receiving and interpreting a request from said client (303) for a video segment of said video item, said request specifying an arbitrary requested quality;
- selecting video slices (431, 442) for said video segment proportionally from said plural quality versions (316, 317) in a ratio matching said arbitrary requested quality; and
- streaming to said client (303) said video segment composed of said video slices (431, 442) proportionally selected.

7. An adaptive streaming video encoder able to encode video segments of a video item in plural quality versions (316, 317), said plural quality versions (316, 317) having the same image aspect ratio,
**CHARACTERIZED IN THAT** said adaptive streaming video encoder is adapted to encode in corresponding video slices (411, 421; 412, 422) of said plural quality versions (316, 317) bit strings for equal image portions.

8. An adaptive streaming video encoder according to claim 7, said adaptive streaming video encoder further being adapted to encode in corresponding video frames of said plural quality versions (316, 317) equal motion vectors.

9. An adaptive streaming video encoder according to claim 7, said adaptive streaming video encoder further being adapted to synchronize frame mode transitions in said plural quality versions (316, 317).

10. A method for encoding video segments of a video item in plural quality versions (316, 317), said plural quality versions (316, 317) having the same image aspect ratio,
**CHARACTERIZED IN THAT** said method comprises encoding in corresponding video slices (411, 421; 412, 422) of said plural quality versions (316, 317) bit strings for equal image portions.

11. An adaptive streaming aware client (303) able to request, receive and decode video segments of a video item, said video item being available in plural quality versions (316, 317), said plural quality versions (316, 317) having the same image aspect ratio and corresponding video slices (411, 421; 412, 422) in said plural quality versions (316, 317) being pre-processed to contain bit strings for equal image portions, said adaptive streaming aware client (303) comprising:
- request generating means for generating a request for a video segment of said video item, said request specifying an arbitrary requested quality that does not correspond with any one of said plural quality versions (316, 317).

12. An adaptive streaming aware client (303) according to claim 11, further comprising:
- manifest file receiving means for receiving and interpreting a manifest file describing availability of video slices of said video item in said plural quality versions (316, 317);
- per-slice quality selecting means for selecting a requested quality version for each video slice in said video segment, said requested quality version being selected proportionally from said plural quality versions (316, 317) in a ratio matching said arbitrary requested quality;
- said request generating means being adapted to generate a request specifying said requested quality version for each video slice.

13. A method for requesting, receiving and decoding video segments of a video item, said video item being available in plural quality versions (316, 317), said plural quality versions (316, 317) having the same image aspect ratio and corresponding video slices (411, 421; 412, 422) in said plural quality versions (316, 317) being pre-processed to contain bit strings for equal image portions, said method comprising:
- generating a request for a video segment of said video item, said request specifying an arbitrary requested quality that does not correspond with any one of said plural quality versions (316, 317).
